# EUROPÄISCHE PATENTSCHRIFT

(11) **EP 3 313 679 B1**
(45) Veröffentlichungstag und Bekanntmachung des Hinweises auf die Patenterteilung: **06.02.2019**
(21) Anmeldenummer: 16733044.8
(22) Anmeldetag: 23.06.2016
(51) Int. Cl.: B60H 1/00, B61D 27/00

(54) **KLIMAANLAGE FÜR EIN FAHRZEUG, INSBESONDERE AUFDACHKLIMAANLAGE UND FAHRZEUG MIT EINER SOLCHEN KLIMAANLAGE**
AIR-CONDITIONING SYSTEM FOR A VEHICLE, IN PARTICULAR ROOFTOP AIR-CONDITIONING SYSTEM, AND VEHICLE HAVING AN AIR-CONDITIONING SYSTEM OF SAID TYPE
INSTALLATION DE CLIMATISATION POUR VÉHICULE, EN PARTICULIER INSTALLATION DE CLIMATISATION SUR TOIT ET VÉHICULE ÉQUIPÉ D'UNE TELLE INSTALLATION DE CLIMATISATION

(30) Priorität: 23.06.2015 DE 102015211608
(43) Veröffentlichungstag der Anmeldung: 02.05.2018
(73) Patentinhaber: Mahle International GmbH, 70376 Stuttgart (DE)
(72) Erfinder: HIPP-KALTHOFF, Christoph, 70192 Stuttgart (DE); KNORR, Hans-Henning, 73630 Remshalden (DE); VOIGT, Klaus, 74321 Bietigheim-Bissingen (DE)
(74) Vertreter: BRP Renaud & Partner mbB Rechtsanwälte Patentanwälte Steuerberater
(86) Internationale Anmeldenummer: PCT/EP2016/064583
(87) Internationale Veröffentlichungsnummer: WO 2016/207302

(56) Entgegenhaltungen:
- DE-A1- 10 062 686
- DE-A1-102007 062 943
- FR-A1- 2 783 226

## Beschreibung

Die Erfindung betrifft eine Klimaanlage für ein Fahrzeug, beispielsweise einen Bus, Lastkraftwagen oder Schienenfahrzeug, insbesondere eine Aufdachklimaanlage zur Montage auf einem Fahrzeugdach, mit einem Kondensatormodul und/oder einem Klimamodul. Ferner betrifft die Erfindung ein Fahrzeug mit einer solchen Klimaanlage.

Solche Klimaanlagen werden beispielsweise genutzt um einen Innenraum der Fahrzeuge zu kühlen und dadurch ein angenehmes Klima für die Insassen des Fahrzeugs bereitzustellen. Aufdachklimaanlagen sind auf dem Fahrzeugdach des Fahrzeugs angeordnet. Dadurch kann zum einen der Innenraum des Fahrzeugs gleichmäßiger klimatisiert werden, zum anderen wird für die Klimaanlage im beengten Motorraum des Fahrzeugs kein Platz beansprucht. Typischerweise werden solche Aufdachklimaanlagen mit Tragrahmen aus Metall gebaut. Solche Tragrahmen und damit auch die Klimaanlagen sind verhältnismäßig schwer. Bei der Montage auf dem Dach ist ein hohes Gewicht der Klimaanlage ungünstig, da dieses das Verhalten des Fahrzeugs ungünstig beeinflusst.

Aus der DE 10 2009 056 968 B3 ist beispielsweise eine gattungsgemäße Aufdachklimaanlage bekannt.

Aus der DE 10 2006 047 367 B4 ist eine Aufdachklimaanlage mit einem zusammengesetzten Gehäuse bekannt. Das Gehäuse ist dabei aus Aluminium oder aus Spritzgusskunststoff oder geschäumten Kunststoff hergestellt.

Die DE 10 2012 018 272 A1 offenbart eine Aufdachklimaanlage mit positionsstabilisierter Abdeckhaube, die über eine Drehachse aufklappbar ist, so dass die Klimaanlage gewartet werden kann. Die Abdeckhaube kann aufgrund der Drehachse wieder leicht positioniert werden, so dass das Öffnen und Schließen der Klimaanlage einfach ist. Ein Zapfen oder Zapfenaufnehmer dienen zusätzlich zur Positionierung der Abdeckhaube können dabei aus expandiertem Kunststoff bestehen.

Die DE 10 2012 216 039 A1 offenbart ein Gehäuse für eine Klimaanlage. Eine Gehäusewanne des Gehäuses ist aus Kunststoffmaterial gefertigt.

Die FR 2783 226 A1 offenbart eine Klimatisierungsanordnung gemäß Oberbegriff des Anspruchs 1, bei welcher ein mehrteiliger Tragerahmen vorgesehen ist. Die Einzelteile des Tragrahmens sind durch Vierkantrohre gebildet, die über Eckelemente, welche in die Vierkantrohre eingreifen, miteinander verbunden.

Die DE 100 62 686 A1 offenbart eine Klimaanlage zur Montage an einer Dachöffnung des durch ein Gerippe verstärkten Daches eines Fahrzeuges, wobei das der Dachöffnung entsprechende Teilgerippe eine Basiseinrichtung der Klimaanlage bildet, an der Komponenten der Klimaanlage angebracht sind.

Die DE 2007 062 943 A1 offenbart eine Fahrzeugklimaanlage mit einer auf dem Fahrzeugdach und/oder an einem Klimaanlagengehäuse angeordneten Haubenklappe. Die Haubenklappe ist über Scharniere mit dem Fahrzeugdach und/oder dem Klimaanlagengehäuse verbunden.

Diese Klimaanlagen haben zwar gemeinsam, dass einzelne Komponenten aus Kunststoff gefertigt sind. Allerdings sind die einzelnen Komponenten ungünstig zu montieren.

Der vorliegenden Erfindung liegt die Aufgabe zugrunde, eine verbesserte oder zumindest andere Ausführungsform einer Klimaanlage bereitzustellen, die sich insbesondere durch ein reduziertes Gewicht und/oder durch eine einfache Montage und/oder Herstellung der einzelnen Komponenten auszeichnet.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, einige Komponenten der Klimaanlage aus Kunststoff zu fertigen, insbesondere das Kondensatorgehäuse und/oder den Tragrahmen. Des Weiteren werden Verbindungen vorgesehen, wie beispielsweise Rast- Niet- oder Schraubverbindungen, um die einzelnen Komponenten, die aus Kunststoff hergestellt sind, aneinander oder an dem Fahrzeugdach zu befestigen. Zweckmäßig ist es, dass an dem Tragrahmen mindestens eine Rastverbindung zur Befestigung des Tragrahmens vorgesehen ist. Alternativ oder ergänzend kann vorgesehen sein, dass an dem Tragrahmen mindestens eine Steckverbindung mit Sicherungselement zur Befestigung des Tragrahmens vorgesehen ist. Dadurch kann die Klimaanlage einfach montiert werden. Dies ist insbesondere vorteilhaft, da es sich um eine Aufdachklimaanlage handelt, bei welcher die spätere Reparatur und neue Montage an dem Fahrzeugdach schwierig ist.

Erfindungsgemäß ist vorgesehen, dass der Tragrahmen aus Kunststoff hergestellt ist, insbesondere durch Spritzguss, dass der Tragrahmen mehrere Teile umfasst, und dass die Teile des Tragrahmens durch die mindestens eine Rastverbindung und/oder durch die mindestens eine Steckverbindung mit Sicherungselement miteinander verbunden sind. Dadurch, dass der Tragrahmen aus Kunststoff hergestellt ist, kann eine erhebliche Menge an Metall eingespart werden, wodurch sich das Gewicht der Klimaanlage reduziert. Durch die Unterteilung des Tragrahmens in mehrere Teile kann erreicht werden, dass die für die Herstellung der einzelnen Teile benötigten Spritzgussformen jeweils deutlich kleiner sind als eine Spritzgussform, mit welcher der Tragrahmen einstückig ausgebildet werden könnte. Dies liegt insbesondere daran, dass der Tragrahmen eine nicht ausgefüllte Fläche umschließt, welche die Spritzgussform ebenfalls umgreifen müsste. Dadurch, dass die einzelnen Teile des Tragrahmens durch die mindestens eine Rastverbindung miteinander verbunden sind, können die einzelnen Teile des Tragrahmens leicht miteinander verbunden werden, so dass der Montageaufwand der Klimaanlage durch die Unterteilung des Tragrahmens nicht erhöht wird. Vielmehr kann sogar eine Erleichterung erzielt werden, da der Tragrahmen am Stück aufgrund seiner Ausmaße schwieriger zu positionieren ist als die einzelnen Teile des Tragrahmens.

In der Beschreibung und den beigefügten Ansprüchen heißt "mehrteilig" mindestens zweiteilig.

Eine weitere günstige Möglichkeit sieht vor, dass der Tragrahmen eine im Wesentlichen rechteckige Grundform mit zwei Querstreben und zwei Längsstreben aufweist, wobei die Querstreben und die Längsstreben jeweils über Rastverbindungen und/oder durch Steckverbindungen mit Sicherungselement miteinander verbunden sind. Dadurch ist der Tragrahmen in vier Teile unterteilt, welche über die Rastverbindungen miteinander verbunden werden können. Die für die einzelnen Teile benötigten Spritzgussformen umschließen dadurch eine geringe Fläche, da die Querstreben und die Längsstreben im Wesentlichen länglich ausgebildet sind. Folglich können auf diese Weise Kosten bei der Herstellung der Spritzgussform und der Lagerung der Spritzgussformen reduziert werden.

Eine besonders günstige Möglichkeit sieht vor, dass Ecken des Tragrahmens an den Längsstreben ausgebildet sind. Das bedeutet insbesondere, dass die Rastverbindungen und/oder durch die Steckverbindungen mit Sicherungselement an den Querstreben in einer Längsrichtung der Querstrebe ausgerichtet sind und die Rastverbindungen an den Längsstreben quer zu einer Längsrichtung der Längsstreben ausgebildet sind, oder umgekehrt. Auf diese Weise kann in einfacher Weise die rechteckige Grundform des Tragrahmens erzielt werden.

Ferner ist erfindungsgemäß vorgesehen, dass der Tragrahmen das Kondensatormodul und/oder das Klimamodul trägt, dass an dem Tragrahmen mindesten eine Rastverbindung zur Befestigung des Kondensatorgehäuses und/oder des Klimagehäuses vorgesehen ist. Dadurch kann die Montage einer Komplexeren Klimaanlage mit Kondensatormodul erleichtert werden.

Eine zweckmäßige Lösung sieht vor, dass an dem Tragrahmen mindestens eine Steckverbindung mit Sicherungselement zur Befestigung des Kondensatorgehäuses und/oder des Klimagehäuses vorgesehen ist. Zusätzlich zur Rastverbindung kann also auch noch eine solche Steckverbindung vorgesehen sein. Dadurch kann die Stabilität der Verbindung erhöht werden.

Eine weitere besonders günstige Möglichkeit sieht vor, dass die Längsstreben länger sind als die Querstreben. Auf diese Weise kann die Klimaanlage leicht in Längsrichtung in zwei Abschnitte unterteilt werden, die jeweils unterschiedliche Aufgaben erfüllen. So können beispielsweise das Klimamodul und das Kondensatormodul in Längsrichtung hintereinander angeordnet sein, ohne dadurch in Querrichtung des Fahrzeugs eine Asymmetrie zu erzeugen.

Eine vorteilhafte Lösung sieht vor, dass der Tragrahmen eine im Wesentlichen rechteckige Grundform mit zwei Querstreben und zwei Längsstreben aufweist, wobei der Tragrahmen an den Längsstreben oder den Querstreben unterteilt ist, derart, dass das Kondensatormodul auf einem ersten Teil des Tragrahmens und das Klimamodul auf einem zweiten Teil des Tragrahmens angeordnet ist. Dadurch können das Kondensatormodul und das Klimamodul getrennt voneinander montiert werden und später bei der Montage der Klimaanlage durch Verbinden der beiden Teile des Tragrahmens miteinander verbunden werden, um die fertige Klimaanlage zu bilden. Dadurch wird die Vormontage der Klimaanlage erheblich vereinfacht.

Eine weitere vorteilhafte Lösung sieht vor, dass der erste Teil des Tragrahmens und der zweite Teil des Tragrahmens durch die mindestens eine Rastverbindung miteinander verbunden sind. Dadurch kann die Montage der Klimaanlage, insbesondere das Verbinden der beiden Teile der Klimaanlage erheblich erleichtert werden, da das Herstellen einer Rastverbindung sehr einfach ist.

Eine besonders vorteilhafte Lösung sieht vor, dass der erste Teil des Tragrahmens und der zweite Teil des Tragrahmens ineinander gesteckt sind und an einer

Verbindungsstelle über eine gemeinsame Schraubverbindung mit dem Fahrzeugdach verbunden sind. Auf diese Weise können ebenfalls die beiden Teile des Tragrahmens unkompliziert miteinander verbunden werden. Die sowieso benötigte Schraubverbindung dient dadurch als Querverbindung zwischen den beiden Tragrahmen.

Eine günstige Variante sieht vor, dass das Kondensatorgehäuse durch die mindestens eine Rastverbindung mit dem Tragrahmen verbunden ist. Dadurch kann die Montage der Klimaanlage noch weiter erleichtert werden.

Eine weitere günstige Variante sieht vor, dass die Rastverbindung lösbar ausgebildet ist. Dadurch kann bei einer späteren Wartung der Klimaanlage das Kondensatorgehäuse leicht vom Rahmen getrennt werden, so dass der Kondensator zugänglich wird.

Eine besonders günstige Variante sieht vor, dass die Rastverbindung an dem Kondensatorgehäuse Rastelemente aufweist, welche jeweils ein Federelement und eine Rastnase umfassen, die an dem Federelement gehalten ist. Dadurch wird die Rastnase durch das Federelement vorgespannt, so dass die Rastnase in ein Gegenrastelement eingreifen kann. Insbesondere schnappt die Rastnase angetrieben durch das Federelement in eine formschlüssige Verbindung.

Eine weitere besonders günstige Variante sieht vor, dass an dem Tragrahmen, insbesondere an einer Halterung für das Kondensatormodul mehrere Gegenrastelemente angeordnet sind, die jeweils durch eine Vertiefung mit Hinterschnitt gebildet sind und in welche die Rastelemente des Kondensatorgehäuses eingreifen. Solche Gegenrastelemente können besonders einfach durch eine Ausnehmung in einem Flachmaterial gebildet sein. Des Weiteren wirken solche Gegenrastelemente hervorragend mit den beschriebenen Rastelementen zusammen, so dass eine gute Rastverbindung zwischen dem Kondensatorgehäuse und dem Tragrahmen hergestellt werden kann.

Eine vorteilhafte Möglichkeit sieht vor, dass die Rastelemente einen Hebel aufweisen, der aus den Gegenrastelementen herausragt, wenn die Rastverbindung hergestellt ist und durch welchen die Rastnase derart bewegt werden kann, dass die Rastverbindung gelöst werden kann. Insbesondere kann über den Hebel das Federelement der Rastelemente gespannt werden, so dass die Rastnase aus dem Hinterschnitt der Gegenrastelemente gezogen werden kann und dadurch die Rastverbindung gelöst werden kann.

Eine weitere vorteilhafte Möglichkeit sieht vor, dass das Kondensatorgehäuse aus Kunststoff hergestellt ist, insbesondere durch Spritzguss. Dadurch weist das Kondensatorgehäuse nur ein geringes Gewicht auf, so dass das Gewicht der Klimaanlage insgesamt reduziert werden kann.

Eine besonders vorteilhafte Möglichkeit sieht vor, dass die Aufdachklimaanlage mindestens ein Verstärkungselement aufweist, das ein Bauteil aus Kunststoff verstärkt. Solche Bauteile aus Kunststoff können insbesondere der Tragrahmen und/oder das Kondensatorgehäuse sein. Durch die Verwendung eines Verstärkungselementes kann die Steifigkeit des betreffenden Bauteiles erhöht werden. Dadurch kann insgesamt die benötigte Materialmenge reduziert werden, so dass dadurch auch eine Kostenersparnis erzielt wird. Insbesondere kann das Verstärkungselement an solche Stellen vorgesehen sein, an denen eine erhöhte Steifigkeit oder Festigkeit notwendig ist. Dadurch kann teureres oder schwereres Material gezielt nur an diesen Stellen angesetzt werden, an denen es auch wirklich benötigt wird. Dadurch kann insgesamt das Gewicht des betreffenden Bauteiles reduziert werden.

Eine günstige Lösung sieht vor, dass das Verstärkungselement aus Metall gebildet ist. Metalle weisen im Vergleich zu Kunststoffen eine höhere Festigkeit und Steifigkeit auf. Dadurch ist ein aus Metall gefertigtes Verstärkungselement gut geeignet, um ein Bauteil aus Kunststoff zu verstärken. Gleichzeitig wird nur eine geringe Gewichtszunahme dadurch bewirkt, da das Verstärkungselement nur gezielt an den Stellen eingesetzt wird, an denen die erhöhte Festigkeit des Verstärkungselements notwendig ist.

Eine weitere günstige Lösung sieht vor, dass das Verstärkungselement ein Blechteil ist. Blechteile sind sehr einfach mittels Stanzwerkzeugen herzustellen. Dadurch können die Verstärkungselemente kostengünstig hergestellt werden.

Ferner wird die oben genannte Aufgabe durch ein Fahrzeug mit einer Klimaanlage gemäß der vorstehenden Beschreibung gelöst, wobei die Klimaanlage auf einem Dach des Fahrzeugs angeordnet ist und einen Innenraum des Fahrzeugs klimatisiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein Fahrzeug mit einer Aufdachklimaanlage,
- Fig. 2: eine Teilexplosionszeichnung einer Aufdachklimaanlage,
- Fig. 3: eine Aufsicht auf einen Tragrahmen,
- Fig. 4: eine Explosionszeichnung des Tragrahmens aus Fig. 3,
- Fig. 5: eine Ansicht von unten auf den Tragrahmen aus Fig. 3,
- Fig. 6: eine perspektivische Ansicht eines Tragrahmens gemäß einer zweiten Ausführungsform mit einem an dem Tragrahmen gehaltenen Kondensatorgehäuse,
- Fig. 7: eine perspektivische Explosionsdarstellung des Tragrahmens aus Fig. 6,
- Fig. 8: eine vergrößerte Darstellung des Bereichs A aus Fig. 7,
- Fig. 9: eine weitere vergrößerte Darstellung des Bereichs A aus Fig. 7,
- Fig. 10: eine vergrößerte Darstellung eines dem Bereich A aus Fig. 7 entsprechenden Bereichs eines Tragrahmens gemäß einer Variante der zweiten Ausführungsform,
- Fig. 11: eine perspektivische Darstellung entsprechend Fig. 10 aus einem anderen Blickwinkel,
- Fig. 12: eine perspektivische Darstellung eines dem Bereich A aus Fig. 7 entsprechenden Bereichs einer weiteren Variante der zweiten Ausführungsform des Tragrahmens,
- Fig. 13: eine in der Fig. 12 entsprechenden Ansicht, wobei ein erster Teil des Tragrahmens und ein zweiter Teil des Tragrahmens voneinander getrennt sind,
- Fig. 14: eine perspektivische Ansicht auf eine Längsstrebe eines Tragrahmens gemäß einer vierten Variante der zweiten Ausführungsform,
- Fig. 15: eine perspektivische Ansicht des Bereichs B aus Fig. 14,
- Fig. 16: eine vergrößerte Darstellung des Bereichs B aus Fig. 14, wobei die beiden Teile des Tragrahmens getrennt sind,
- Fig. 17: eine der Fig. 6 entsprechende Ansicht, wobei der Blickwinkel gedreht ist,
- Fig. 18: eine perspektivische Ansicht auf einen Kondensatormodulträger, welcher an den Tragrahmen angeordnet ist, mit einem an dem Kondensatormodulträger verbundenen Kondensatorgehäuse,
- Fig. 19: eine der Fig. 18 entsprechende Ansicht, wobei das Kondensatorgehäuse und der Kondensator von dem Kondensatormodulträger gelöst sind,
- Fig. 20: eine vergrößerte Darstellung einer Rastverbindung mit einem Rastelement und einem Gegenrastelement, wobei die Rastverbindung geöffnet ist,
- Fig. 21: eine perspektive Aussicht auf eine Rastverbindung gemäß Fig. 20, wobei die Rastverbindung geschlossen ist,
- Fig. 22: eine perspektivische Ansicht auf ein Bauteil aus Kunststoff mit einem Verstärkungselement,
- Fig. 23: eine der Fig. 22 entsprechende Ansicht, wobei das Verstärkungselement halb herausgezogen ist, und
- Fig. 24: eine der Fig. 22 entsprechende Ansicht einer anderen Variante eines Bauteils mit einem Verstärkungselement.

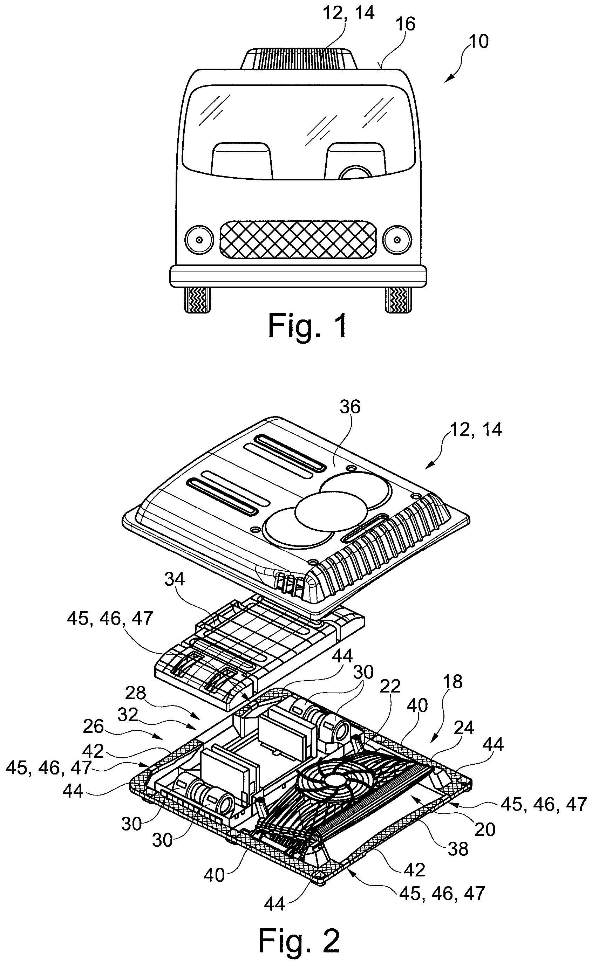

Ein in Fig. 1 dargestelltes Fahrzeug 10, beispielsweise ein Kraftfahrzeug wie ein Bus oder ein Schienenfahrzeug, weist eine Klimaanlage 12, welche als Aufdachklimaanlage 14 ausgebildet ist, auf. Die Klimaanlage 12 ist auf einem Fahrzeugdach 16 angeordnet. Die Klimaanlage 12 weist ein Kondensatormodul 18 auf, welches einen Kondensator 20 mit einem Wärmetauscher, einen Lüfter 22 und ein Kondensatorgehäuse 24 umfasst. In dem Kondensator 20 kondensiert Kühlmittel, wodurch die Klimaanlage 12 Wärme an die Umgebung abgeben kann. Die Klimaanlage 12 weist ferner ein Klimamodul 26 auf, das einen Verdampfer 28 mit einem Wärmetauscher, mindestens einem Lüfter 30, einem Heizer 32 mit einem Wärmetauscher und einem Klimagehäuse 34 auf. In dem Verdampfer 28 kann Kühlmittel verdampfen und dadurch Wärme aufnehmen, so dass durch den Wärmetauscher Luft gekühlt werden kann, mit welcher ein Innenraum des Fahrzeugs 10 gekühlt werden kann.

Ferner weist die Klimaanlage 12 eine Abdeckhaube 36 auf, mit welcher die Klimaanlage 12 abgedeckt ist. Des Weiteren weist die Klimaanlage 12 einen Tragrahmen 38 auf, welcher das Kondensatormodul 18, das Klimamodul 26 und die Abdeckhaube 36 trägt. Mit Hilfe des Tragrahmens 38 sind die Elemente der Klimaanlage 12 mit dem Fahrzeugdach 16 verbunden.

Der Tragrahmen 38 weist eine im Wesentlichen rechteckige Grundform auf. Insbesondere weist der Tragrahmen 38 zwei Längsstreben 40 und zwei Querstreben 42 auf. Die Längsstreben 40 und Querstreben 42 sind an Ecken 44 des Tragrahmens 38 miteinander verbunden.

Der Tragrahmen 38 ist aus Kunststoff hergestellt. Insbesondere ist der Tragrahmen 38 durch ein Kunststoffspritzgussverfahren hergestellt. Dies ermöglicht eine große Variationsfreiheit in der Form des Tragrahmens 38. Dadurch können beispielsweise an den Tragrahmen 38 in einfacher Weise Steckverbindungen 45 mit Sicherungselement 47, wie beispielsweise Rastverbindungen 46, angebracht sein. Die Längsstreben 40 und die Querstreben 42 sind getrennt voneinander ausgebildet. Das heißt sie werden in eigenen Spritzgussformen hergestellt. Dadurch können die Spritzgussformen für die Längsstreben 40 und Querstreben 42 erheblich günstiger hergestellt werden als eine Spritzgussform, in welcher der Tragrahmen 38 einstückig gespritzt werden kann.

Die Längsstreben 40 und die Querstreben 42 sind durch die Rastverbindungen 46 miteinander verbunden. Vorzugsweise weist der Tragrahmen 38 mindestens vier Rastverbindungen 46 auf. Die Rastverbindungen 46 sind dabei vorzugsweise in der Nähe der Ecken 44 des Tragrahmens 38 angeordnet. Auf diese Weise spannen die Längsstreben 40 oder die Querstreben 42 nur eine geringe Fläche auf, wodurch die Spritzgussformen für die Längsstreben 40 und die Querstreben 42 kleiner ausgebildet sein können.

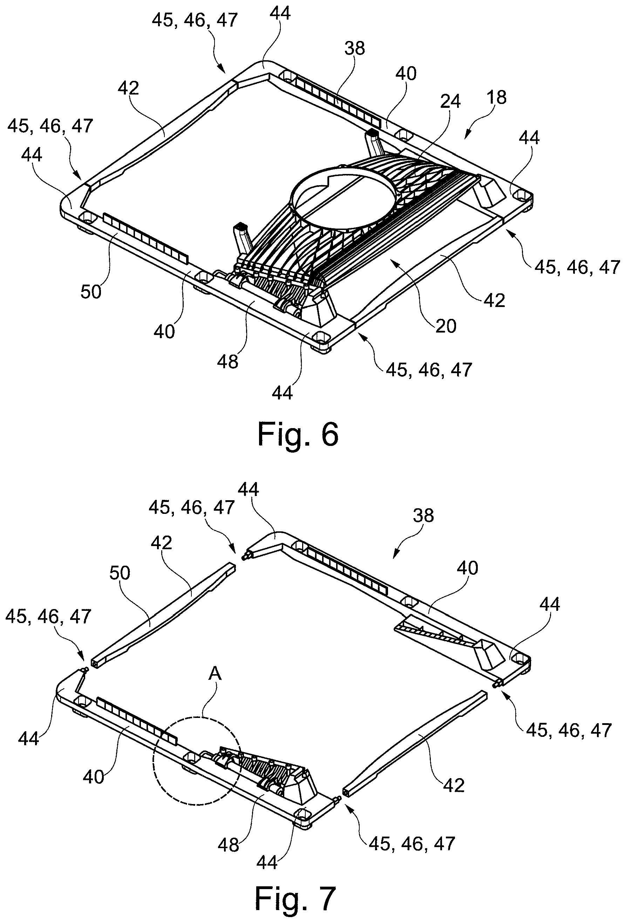

Die Ecken können demnach an den Querstreben 42oder an den Längsstreben 40 wie beispielsweise in den Fig. 6 und 7 dargestellt, angeordnet sein.

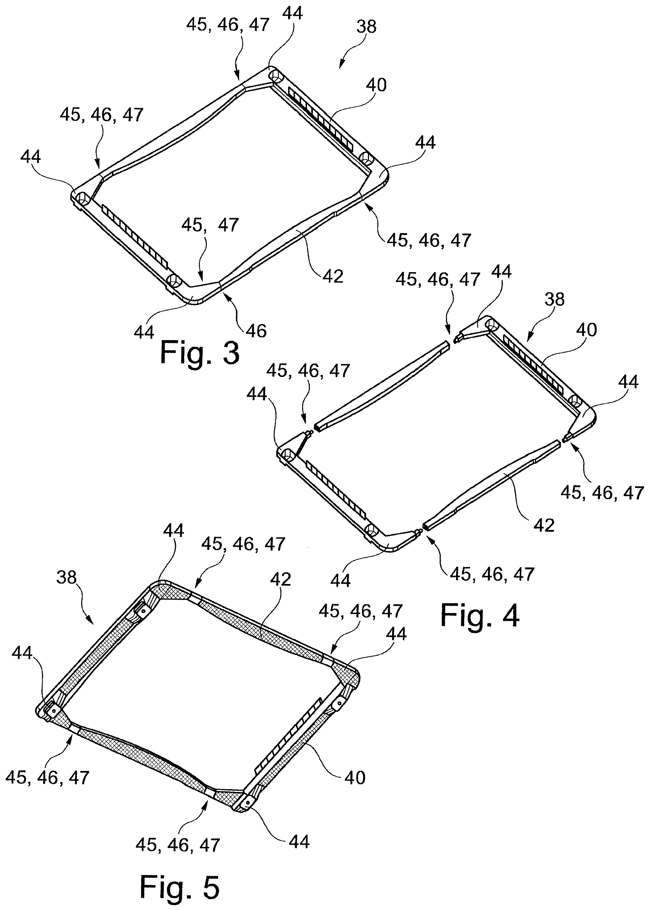

Eine in den Figuren 3 bis 5 dargestellte zweite Variante der ersten Ausführungsform der Klimaanlage 12 unterscheidet sich von der in den Figuren 1 und 2 dargestellten ersten Variante der ersten Ausführungsform der Klimaanlage 12 dadurch, dass an dem Tragrahmen 38 kein Kondensatormodul 18 gehalten ist. Dadurch sind die Längsstreben 40 kürzer als die Querstreben 42. Alternativ kann vorgesehen sein, dass an dem Tragrahmen38 kein Klimamodul 26 gehalten ist. Es versteht sich, dass die nicht am Tragrahmen 38 gehaltenen Module (Klimamodul 26 oder Kondensatormodul 18) an einer anderen Stelle des Fahrzeugs 10 untergebracht sein können. Alternativ kann die Klimaanlage 12 auch ohne das jeweilige Modul ausgebildet sein. Im Übrigen stimmt die zweite Variante der ersten Ausführungsform mit der ersten Variante der ersten Ausführungsform überein, auf deren vorstehende Beschreibung insoweit Bezug genommen wird.

Die in Fig. 6 bis 17 dargestellte zweite Ausführungsform der Klimaanlage 12 unterscheidet sich von der in den Fig. 1 bis 5 dargestellten ersten Ausführungsform der Klimaanlage 12 dadurch, dass der Tragrahmen 38 derart unterteilt ist, dass an einem ersten Teil 48 des Tragrahmens das Kondensatormodul 18 und an einem zweiten Teil 50 des Tragrahmens 38 das Klimamodul 26 gehalten ist. Der erste Teil 48 und der zweite Teil 50 können somit voneinander getrennt mit den Teilen versehen werden, welche von dem Tragrahmen 38 gehalten werden. So kann beispielsweise das Kondensatormodul 18 auf dem ersten Teil 48 des Tragrahmens aufgebaut werden und getrennt davon kann das Klimamodul 26 auf dem zweiten Teil 50 des Tragrahmens 38 aufgebaut werden. Bei der Montage der Klimaanlage 12 auf dem Fahrzeugdach 16 des Fahrzeugs 10 können dann die beiden Teile 48 und 50 mit den jeweiligen Aufbauten miteinander verbunden werden.

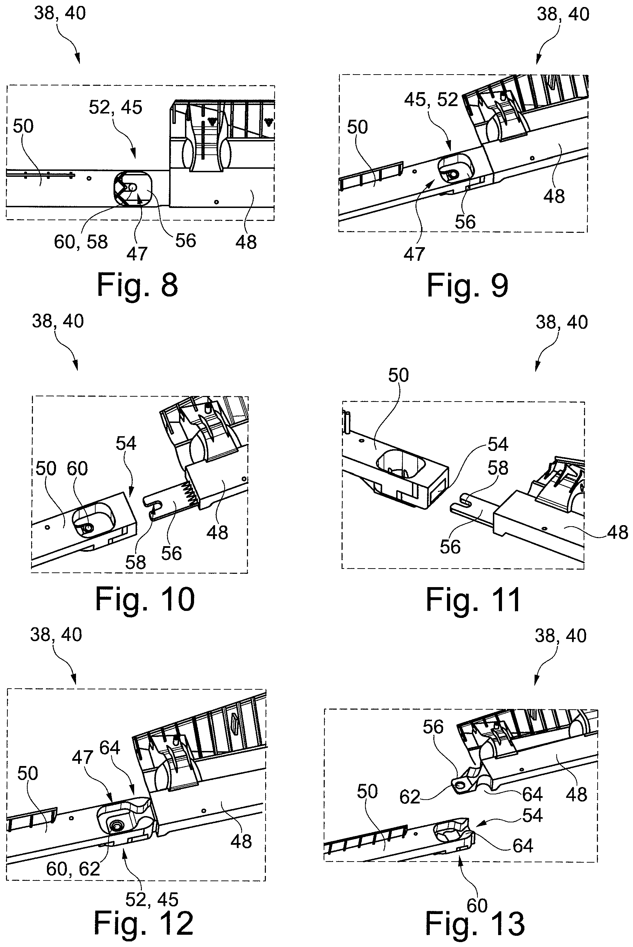

Die Verbindung zwischen dem ersten Teil 48 und dem zweiten Teil 50 des Tragrahmens 38 erfolgt auch über Steckverbindungen 45 mit Sicherungselement 47, wie beispielsweise in den Fig. 8 bis 13 dargestellt ist, durch eine kombinierte Steck- und Schraubverbindung 52. Dabei werden die beiden Teile 48 und 50 des Tragrahmens 38 ineinander gesteckt und die Schraubverbindung 52 im überlappenden Bereich der beiden Teile 48, 50 des Tragrahmens 38 die Schraubverbindung 52 mit dem Fahrzeugdach 16 hergestellt, so dass durch die Schraubverbindung 52 beide Teile des Tragrahmens 48, 50 mit dem Fahrzeugdach 16 verbunden sind.

Wie beispielsweise in den Fig. 8 bis 11 dargestellt ist, weist der Tragrahmen 38 am ersten Teil 48 ein Steckelement 56 auf, welches in eine Stecköffnung 54 am zweiten Teil 50 des Tragrahmens 38 eingesteckt werden kann. Das Steckelement 56 ist dabei flach und länglich ausgebildet und weist an seiner Stirnseite eine Aussparung 58 auf, durch welche eine Schraube oder ein Bolzen, die das Sicherungselement 47 darstellen, der Schraubverbindung 52 durchgreifen kann. Entsprechend weist auch das zweite Teil 50 im Bereich der Stecköffnung 54 eine Bohrung 60 auf, durch welche eine Schraube oder ein Bolzen der Schraubverbindung 52 den Tragrahmen durchgreifen kann. In einer zusammengesteckten Position liegen die Aussparung 58 und die Bohrung 60 übereinander, so dass eine einzelne Schrauben oder Bolzen der Schraubverbindung 52 sowohl die Bohrung als auch die Aussparung 58 durchgreifen kann und somit sowohl den ersten Teil 48 als auch den zweiten Teil 50 des Tragrahmens 38 mit dem Fahrzeugdach 16 verbinden kann. Entsprechend werden auch die beiden Teile des Tragrahmens 38 dadurch miteinander verbunden.

Bei einer zweiten Variante der zweiten Ausführungsform, wie beispielhaft in Fig. 12 und 13 dargestellt, sind die Steckelemente 56 des ersten Teils 48 derart ausgebildet, dass sie anstatt einer Aussparung 58 ebenfalls eine Bohrung 62 aufweisen, durch welche eine Schraube oder ein Bolzen, die das Sicherungselement 47 darstellen, der Schraubverbindung 52 den Tragrahmen durchgreifen kann. Des Weiteren ist das Steckelement 56 derart geformt, dass eine Zusammensteckrichtung quer zu den Trägern erfolgt, insbesondere von oben nach unten. Ein Auseinanderziehen der Steckverbindung in Längsrichtung der Längsstrebe 40 oder Querstrebe 42 ist nicht möglich. Dies wird insbesondere durch eine Verjüngung 64 erreicht, welche zwischen der Bohrung 62 und einem Grundkörper des ersten Teils 48 des Tragrahmens 38 angeordnet ist.

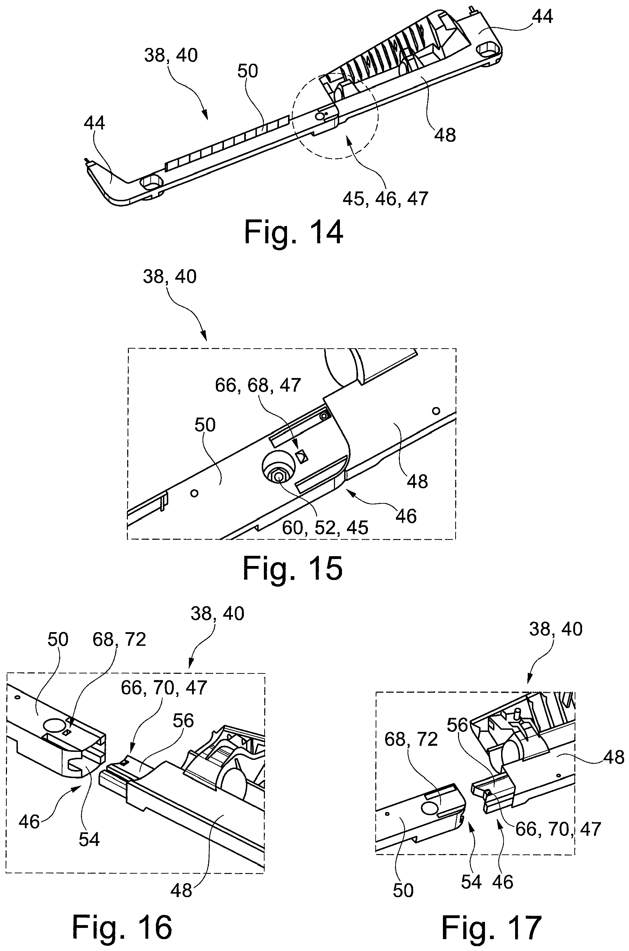

Bei einer dritten Variante der zweiten Ausführungsform, die in den Fig. 14 bis 17 dargestellt ist, sind der erste Teil 48 und der zweite Teil 50 durch eine Rastverbindung 46, die die Steckverbindung 45 mit Sicherungselement 47 darstellt, miteinander verbunden. Der erste Teil 48 weist am Steckelement 56 ein Rastelement 66 auf, welches das Sicherungselement 47 darstellt und welches mit einem Gegenrastelement 68, welches an der Stecköffnung 54 des zweiten Teils 50 des Tragrahmens 38 angeordnet ist, zusammenwirkt.

Das Rastelement 66 weist insbesondere eine Rastnase 70 auf, welche an dem Steckelement 56 außenliegend angeordnet ist. Das Gegenrastelement 68 ist durch eine Ausnehmung 72 im zweiten Teil 50 des Tragrahmens 38 im Bereich der Stecköffnung 54 gebildet. Wenn der erste Teil 48 und der zweite Teil 50 ineinander gesteckt sind, liegen die Rastnase 70 und die Ausnehmung 72 übereinander, so dass die Rastnase 70 in die Ausnehmung 72 einrasten kann und somit die Rastverbindung 46 herstellen kann.

Im zweiten Teil 50 des Tragrahmens 38 ist auch in der dritten Variante der zweiten Ausführungsform die Bohrung 60 vorgesehen, mit welcher der Tragrahmen 38 mittels einer Schraubverbindung 52 an dem Fahrzeugdach 16 befestigt werden kann.

Im Übrigen stimmt die in den Fig. 6 bis 17 dargestellte zweite Ausführungsform der Klimaanlage 12 hinsichtlich Aufbau und Funktion mit der in den Fig. 1 bis 5 dargestellten ersten Ausführungsform der Klimaanlage 12 überein, auf deren vorstehende Beschreibung insoweit Bezug genommen wird.

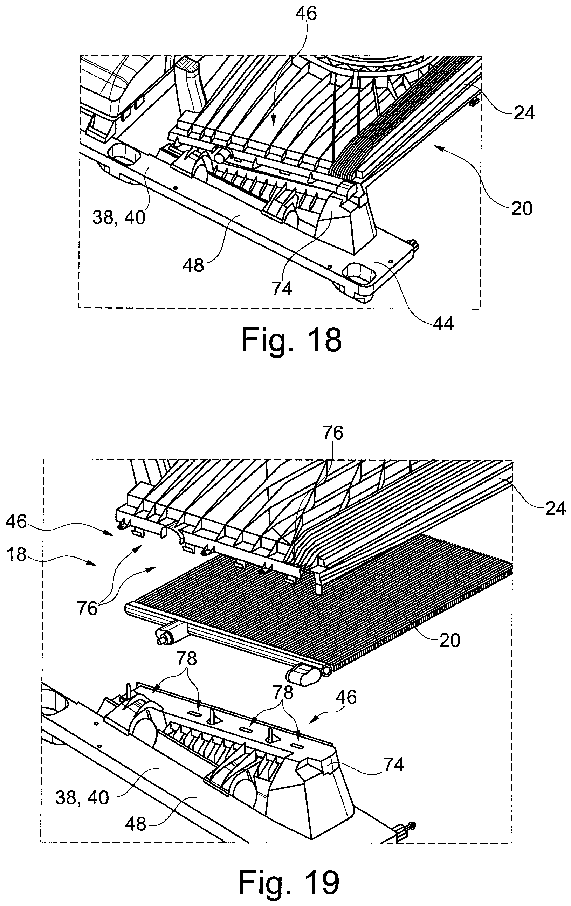

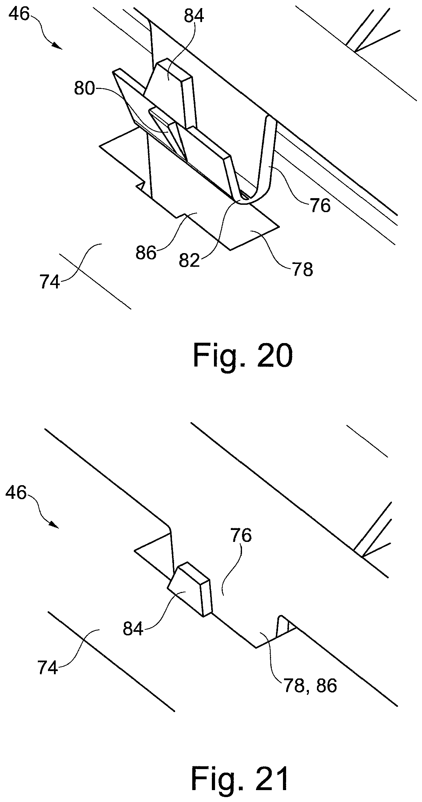

Einer in den Fig. 18 bis 21 dargestellte dritte Ausführungsform der Klimaanlage 12 unterscheidet sich von der in den Fig. 1 bis 5 dargestellten ersten Ausführungsform der Klimaanlage 12 dadurch, dass ein Kondensatormodulträger 74 einstückig an dem Tragrahmen 38 ausgebildet ist. Insbesondere ist der Kondensatormodulträger 74 an den Längsstreben 40 des Tragrahmens 38 ausgebildet.

Eine Rastverbindung 46 ist an dem Tragrahmen 38, insbesondere an dem Kondensatormodulträger 74 und dem Kondensatorgehäuse 24 ausgebildet. Am Kondensatorgehäuse 24 sind mehrere, beispielsweise vier je Seite, Rastelemente 76 ausgebildet, die mit Gegenrastelementen 78, welche an dem Kondensatormodulträger 74 ausgebildet sind, zusammenwirken. Die Rastelemente 76 weisen jeweils eine Rastnase 80, welche an einem Federelement 82 gehalten ist, und einen Hebel 84 auf, mit welchem das Federelement 82 gespannt werden kann. Dazu ist das Federelement 82 im Querschnitt V-förmig ausgebildet, wobei ein Arm des V an dem Kondensatorgehäuse 24 gehalten ist und an dem anderen Arm des V außenliegen die Rastnase 80 angeordnet ist und an der Spitze desselben Arms des Vs der Hebel 84 angeordnet ist. Ist nun eine Rastverbindung 46 durch Einstecken des Rastelements 76 in das Gegenrastelement 78 ausgebildet, steht der Hebel 84 aus dem Gegenrastelement 78 hervor, so dass mittels des Hebels 84 das Federelement 82 gespannt werden kann und dadurch die Rastnase 80 zurückgezogen werden kann, so dass sich die Rastverbindung 46 löst.

Entsprechend sind die Gegenrastelemente 78 an dem Kondensatormodulträger 74 ausgebildet. Beispielsweise können die Gegenrastelemente durch eine rechteckige Vertiefung 86 gebildet sein, die einen Hinterschnitt aufweist. Dieser Hinterschnitt kann beispielsweise dadurch erzielt werden, dass die Vertiefung 86 in ein Flachmaterial ausgebildet wird und dieses vollständig durchgreift. Somit wird der Hinterschnitt auf der Rückseite des Flachmaterials gebildet.

Im Übrigen stimmt die in den Fig. 18 bis 21 gezeigte dritte Ausführungsform der Klimaanlage 12 hinsichtlich Aufbau und Funktion mit der in den Fig. 1 bis 5 dargestellten ersten Ausführungsform der Klimaanlage 12 überein, auf deren vorstehende Beschreibung insoweit Bezug genommen wird.

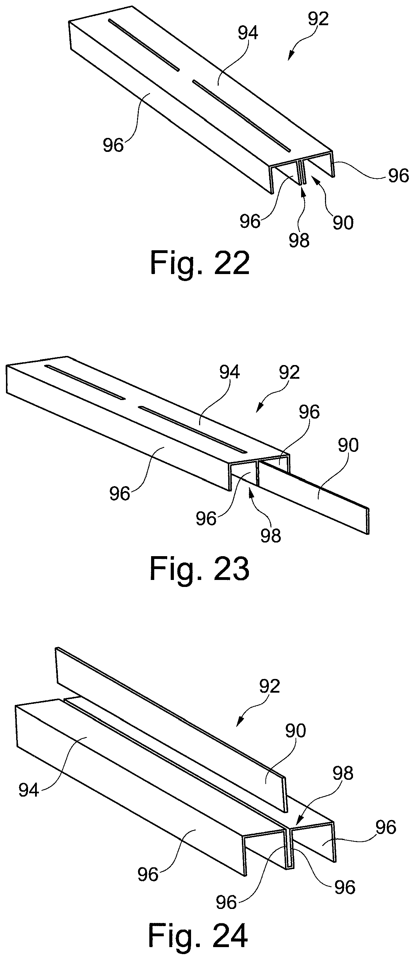

Eine in den Fig. 22 bis 24 dargestellte Variante der ersten bis dritten Ausführungsform zeichnet sich dadurch aus, dass mindestens ein Bauteil, das aus Kunststoff hergestellt ist, ein Verstärkungselement 90 aufweist. Dazu ist das Bauteil 92 profilförmig ausgebildet. Vorzugsweise weist das Bauteil 92 einen Rücken 94 auf, von welchem sich in einen Richtung Streben 96 erstrecken und dadurch eine Versteifung des Bauteils 92 bewirken. Um das Verstärkungselement 90 an dem Bauteil 92 anzuordnen weist das Bauteil eine Nut 98 auf, in welche das Verstärkungselement 90 eingeschoben werden kann und dadurch das Bauteil 92 verstärkt. Beispielsweise kann die Nut 98 am Rücken 94 des Bauteils 92 gebildet sein und dabei zwischen zwei Streben 96 verlaufen. Alternativ oder ergänzend hierzu kann die Nut 98 auch direkt zwischen zwei Streben 96 gebildet sein und zu der andere Seite hin offen ist, also der dem Rücken 94 abgewandten Seite des Bauteils 92 offen. Dadurch ergibt sich eine hohe Flexibilität, da das Verstärkungselement 90 je nach Ausführung des Bauteils 92 von beiden Seiten in das Bauteil 92 eingesetzt werden kann.

Beispiele für solche Bauteile 92 aus Kunststoff sind insbesondere der Tragrahmen 38 und seine Bestandteile, wie beispielsweise die Längsstreben 40, die Querstreben 42, der erste Teil 48 und der zweite Teil 50, oder das Kondensatorgehäuse 24, das Klimagehäuse 34 oder die Abdeckhaube 36 der Klimaanlage 12.

Das Verstärkungselement 90 ist aus einem steifen und festen Material, wie beispielsweise Metall, insbesondere Stahl oder Aluminium, gebildet. Vorzugsweise ist das Verstärkungselement 90 aus einem Blech hergestellt. Bleche können in einfacher Weise bearbeitet, beispielsweise durch Stanzen, werden, so dass die Herstellung der Verstärkungselement in günstiger Weise möglich ist.

## Patentansprüche

1. Klimaanlage für ein Fahrzeug, beispielsweise ein Bus, Lastkraftwagen oder Schienenfahrzeug, insbesondere Aufdachklimaanlage zur Montage auf einem Fahrzeugdach (16), mit
- einem Kondensatormodul (18), das ein Kondensatorgehäuse (24) und einen im Kondensatorgehäuse (24) angeordneten Kondensator (20) umfasst, und/oder
- einem Klimamodul (26), das ein Klimagehäuse (34) und einen im Klimagehäuse (34) angeordneten Verdampfer (28) umfasst, und
- einem Tragrahmen (38), der das Kondensatormodul (18) und/oder das Klimamodul (26) trägt und dazu ausgebildet ist, das Kondensatormodul (18) und/oder das Klimamodul (26) an dem Fahrzeugdach (16) zu halten,
- wobei der Tragrahmen (38) aus Kunststoff hergestellt ist, und
- wobei der Tragrahmen (38) mehrere Teile (40, 42, 48, 50) umfasst
**dadurch gekennzeichnet,**
- **dass** an dem Tragrahmen (38) mindesten eine Rastverbindung (46) zur Befestigung des Kondensatorgehäuses (24) und/oder des Klimagehäuses (34) vorgesehen ist, und
- **dass** an dem Tragrahmen (38) mindesten eine Rastverbindung (46) zur Befestigung des Tragrahmens (38) vorgesehen ist, wobei die Teile (40, 42, 48, 50) des Tragrahmens (38) durch die mindestens eine Rastverbindung (46) miteinander verbunden sind, und/oder
- **dass** an dem Tragrahmen (38) mindestens eine Steckverbindung (45) mit Sicherungselement (47) zur Befestigung des Tragrahmens (38) vorgesehen ist, wobei die Teile (40, 42, 48, 50) des Tragrahmens (38) durch die mindestens eine Steckverbindung (45) mit Sicherungselement (47) miteinander verbunden sind.

2. Klimaanlage nach Anspruch 1,
**dadurch gekennzeichnet,**
- **dass** der Tragrahmen (38) eine im Wesentlichen rechteckige Grundform mit zwei Querstreben (42) und zwei Längsstreben (40) aufweist, wobei die Querstreben (42) und die Längsstreben (40) jeweils über Rastverbindungen (46) und /oder Steckverbindungen (45) mit Sicherungselement (47) miteinander verbunden sind.

3. Klimaanlage nach Anspruch 1 oder 2,
**dadurch gekennzeichnet,**
- **dass** der Tragrahmen (38) das Klimamodul (26) und/oder das Kondensatormodul (18) trägt, und
- **dass** an dem Tragrahmen (38) mindestens eine Steckverbindung (45) mit Sicherungselement (47) zur Befestigung des Tragrahmens (38) und/oder des Kondensatorgehäuses (24) und/oder des Klimagehäuses (34) vorgesehen ist.

4. Klimaanlage nach einem der Ansprüche 1 bis 3,
**dadurch gekennzeichnet,**
- **dass** der Tragrahmen (38) eine im Wesentlichen rechteckige Grundform mit zwei Querstreben (42) und zwei Längsstreben (40) aufweist, wobei der Tragrahmen (38) an den Längsstreben (40) oder den Querstreben (42) unterteilt ist, derart, dass das Kondensatormodul (18) auf einem ersten Teil (48) des Tragrahmens und das Klimamodul (26) auf einem zweiten Teil (50) des Tragerahmens angeordnet ist.

5. Klimaanlage nach einem der Ansprüche 1 bis 4,
**dadurch gekennzeichnet,**
**dass** das Kondensatorgehäuse (24) durch die mindestens eine Rastverbindung (46) mit dem Tragrahmen (38) verbunden ist.

6. Klimaanlage nach Anspruch 5,
**dadurch gekennzeichnet,**
**dass** die Rastverbindung (46) an dem Kondensatorgehäuse (24) Rastelemente (76) aufweist, welche jeweils ein Federelement (82) und eine Rastnase (80) umfassen, die an dem Federelement (82) gehalten ist.

7. Klimaanlage nach Anspruch 6,
**dadurch gekennzeichnet,**
**dass** an dem Tragrahmen (38), insbesondere an einem Kondensatormodulträger (74), mehrere Gegenrastelemente (78) angeordnet sind, die durch Vertiefungen (86) mit Hinterschnitt gebildet sind und in welche die Rastelemente (76) des Kondensatorgehäuses(24) eingreifen.

8. Klimaanlage nach Anspruch 7,
**dadurch gekennzeichnet,**
**dass** die Rastelemente (76) einen Hebel (84) aufweisen, der aus den Gegenrastelementen (78) herausragen, wenn die Rastverbindung (46) hergestellt ist und durch welchen die Rastnase (80) derart bewegt werden kann, dass die Rastverbindung (46) gelöst werden kann.

9. Klimaanlage nach einem der Ansprüche 1 bis 8,
**dadurch gekennzeichnet,**
**dass** das Kondensatorgehäuse (24) aus Kunststoff hergestellt ist, insbesondere durch Spritzguss.

10. Klimaanlage nach einem der Ansprüche 1 bis 9,
**dadurch gekennzeichnet,**
**dass** die Klimaanlage (12) mindestens ein Verstärkungselement (90) aufweist, das ein Bauteil (38, 24, 90) aus Kunststoff verstärkt.

11. Fahrzeug mit einer Klimaanlage nach einem der Ansprüche 1 bis 10, wobei die Klimaanlage (12) auf einem Fahrzeugdach (16) des Fahrzeugs (10) angeordnet ist und einen Innenraum des Fahrzeugs (10) klimatisiert.

## Claims

1. Air-conditioning system for a vehicle, for example a bus, lorry or rail vehicle, in particular rooftop air-conditioning system for installation on a vehicle roof (16), having
- a capacitor module (18), which comprises a capacitor housing (24) and a capacitor (20) disposed in the capacitor housing (24), and/or
- an air-conditioning module (26), which comprises an air-conditioning housing (34) and an evaporator (28) disposed in the air-conditioning housing (34), and
- a support frame (38), which supports the capacitor module (18) and/or the air-conditioning module (26) and is designed to hold the capacitor module (18) and/or the air-conditioning module (26) on the vehicle roof (16),
- wherein the support frame (38) is made of plastic, and
- wherein the support frame (38) comprises several parts (40, 42, 48, 50) **characterised in**
- **that** on the support frame (38) is provided at least one detent connection (46) for fastening the capacitor housing (24) and/or the air-conditioning housing (34), and
- **that** on the support frame (38) is provided at least one detent connection (46) for fastening the support frame (38), wherein the parts (40, 42, 48, 50) of the support frame (38) are connected with one another by means of the at least one detent connection (46), and/or
- **that** on the support frame (38) is provided at least one plug-in connection (45) with securing element (47) for fastening the support frame (38), wherein the parts (40, 42, 48, 50) of the support frame (38) are connected with one another by means of the at least one plug-in connection (45) with securing element (47).

2. Air-conditioning system according to claim 1,
**characterised in**
- **that** the support frame (38) has a substantially rectangular basic shape with two transverse struts (42) and two longitudinal struts (40), wherein the transverse struts (42) and the longitudinal struts (40) are connected with one another in each case via detent connections (46) and/or plug-in connections (45) with securing element (47).

3. Air-conditioning system according to claim 1 or 2,
**characterised in**
- **that** the support frame (38) supports the air-conditioning module (26) and/or the capacitor module (18), and
- **that** on the support frame (38) is provided at least one plug-in connection (45) with securing element (47) for fastening the support frame (38) and/or the capacitor housing (24) and/or the air-conditioning housing (34).

4. Air-conditioning system according to any of claims 1 to 3,
**characterised in**
- **that** the support frame (38) has a substantially rectangular basic shape with two transverse struts (42) and two longitudinal struts (40), wherein the support frame (38) is subdivided on the longitudinal struts (40) or the transverse struts (42) in such a manner that the capacitor module (18) is disposed on a first part (48) of the support frame and the air-conditioning module (26) is disposed on a second part (50) of the support frame.

5. Air-conditioning system according to any of claims 1 to 4,
**characterised in**
**that** the capacitor housing (24) is connected by means of the at least one detent connection (46) with the support frame (38).

6. Air-conditioning system according to claim 5,
**characterised in**
**that** the detent connection (46) on the capacitor housing (24) has detent elements (76), which comprise respectively one spring element (82) and one detent lug (80) which is held on the spring element (82).

7. Air-conditioning system according to claim 6,
**characterised in**
**that** on the support frame (38), in particular on a capacitor module support (74), several counter-detent elements (78) are disposed, which are formed by recesses (86) with undercut and in which the detent elements (76) of the capacitor housing (24) engage.

8. Air-conditioning system according to claim 7,
**characterised in**
**that** the detent elements (76) have a lever (84) which project out of the counterdetent elements (78) when the detent connection (46) is created and by means of which the detent lug (80) can be moved in such a manner that the detent connection (46) can be released.

9. Air-conditioning system according to any of claims 1 to 8,
**characterised in**
**that** the capacitor housing (24) is manufactured from plastic, in particular by means of injection moulding.

10. Air-conditioning system according to any of claims 1 to 9,
**characterised in**
**that** the air-conditioning system (12) has at least one reinforcing element (90) which reinforces a component (38, 24, 90) made of plastic.

11. Vehicle with an air-conditioning system according to any of claims 1 to 10, wherein the air-conditioning system (12) is disposed on a vehicle roof (16) of the vehicle (10) and air-conditions an inner chamber of the vehicle (10).

## Revendications

1. Installation de climatisation pour un véhicule, par un exemple un bus, un poids lourd ou un véhicule ferroviaire, en particulier installation de climatisation sur toit pour le montage sur un toit de véhicule (16), avec
- un module de condensateur (18) qui comporte un boîtier de condensateur (24) et un condensateur (20) agencé dans le boîtier de condensateur (24), et/ou
- un module de climatisation (26) qui comporte un boîtier de climatisation (34) et un évaporateur (28) agencé dans le boîtier de climatisation (34), et
- un cadre de support (38) qui porte le module de condensateur (18) et/ou le module de climatisation (26) et est réalisé afin de maintenir le module de condensateur (18) et/ou le module de climatisation (26) sur le toit de véhicule (16),
- dans lequel le cadre de support (38) est fabriqué en matière plastique, et
- dans lequel le cadre de support (38) comporte plusieurs parties (40, 42, 48, 50),
**caractérisée en ce**
- **que** sur le cadre de support (38) au moins une liaison d'encliquetage (46) est prévue pour la fixation du boîtier de condensateur (24) et/ou du boîtier de climatisation (34), et
- **que** sur le cadre de support (38) au moins une liaison d'encliquetage (46) est prévue pour la fixation du cadre de support (38), dans lequel les parties (40, 42, 48, 50) du cadre de support (38) sont raccordées les unes aux autres par l'au moins une liaison d'encliquetage (46), et/ou
- **que** sur le cadre de support (38) au moins une liaison par enfichage (45) avec un élément de fixation (47) est prévue pour la fixation du cadre de support (38), dans lequel les parties (40, 42, 48, 50) du cadre de support (38) sont raccordées les unes aux autres par l'au moins une liaison par enfichage (45) avec un élément de fixation (47).

2. Installation de climatisation selon la revendication 1,
**caractérisée en ce**
- **que** le cadre de support (38) présente une forme de base sensiblement rectangulaire avec deux entretoises transversales (42) et deux entretoises longitudinales (40), dans laquelle les entretoises transversales (42) et les entretoises longitudinales (40) sont raccordées respectivement par des liaisons d'encliquetage (46) et/ou liaisons par enfichage (45) avec un élément de fixation (47) les unes aux autres.

3. Installation de climatisation selon la revendication 1 ou 2,
**caractérisée en ce**
- **que** le cadre de support (38) porte le module de climatisation (26) et/ou le module de condensateur (18), et
- **que** sur le cadre de support (38) au moins une liaison par enfichage (45) avec un élément de fixation (47) est prévue pour la fixation du cadre de support (38) et/ou du boîtier de condensateur (24) et/ou du boîtier de climatisation (34).

4. Installation de climatisation selon l'une quelconque des revendications 1 à 3, **caractérisée en ce**
- **que** le cadre de support (38) présente une forme de base sensiblement rectangulaire avec deux entretoises transversales (42) et deux entretoises longitudinales (40), dans laquelle le cadre de support (38) est divisé sur les entretoises longitudinales (40) ou les entretoises transversales (42) de telle manière que le module de condensateur (18) soit agencé sur une première partie (48) du cadre de support et le module de climatisation (26) soit agencé sur une seconde partie (50) du cadre de support.

5. Installation de climatisation selon l'une quelconque des revendications 1 à 4, **caractérisée en ce**
**que** le boîtier de condensateur (24) est raccordé par l'au moins une liaison par encliquetage (46) au cadre de support (38).

6. Installation de climatisation selon la revendication 5,
**caractérisée en ce**
**que** la liaison par encliquetage (46) présente sur le boîtier de condensateur (24) des éléments d'encliquetage (76) qui comportent respectivement un élément de ressort (82) et un nez d'encliquetage (80) qui est maintenu sur l'élément de ressort (82).

7. Installation de climatisation selon la revendication 6,
**caractérisée en ce**
**que** plusieurs éléments d'encliquetage antagoniste (78) sont agencés sur le cadre de support (38), en particulier sur un support de module de condensateur (74), lesquels sont formés par des cavités (86) avec une contre-dépouille et dans lesquels les éléments d'encliquetage (76) du boîtier de condensateur (24) viennent en prise.

8. Installation de climatisation selon la revendication 7,
**caractérisée en ce**
**que** les éléments d'encliquetage (76) présentent un levier (84) qui dépassent des éléments d'encliquetage antagoniste (78) si la liaison par enfichage (46) est établie et par lequel le nez d'encliquetage (80) peut être déplacé de telle manière que la liaison par enfichage (46) puisse être détachée.

9. Installation de climatisation selon l'une quelconque des revendications 1 à 8, **caractérisée en ce**
**que** le boîtier de condensateur (24) est fabriqué en matière plastique, en particulier par moulage par injection.

10. Installation de climatisation selon l'une quelconque des revendications 1 à 9, **caractérisée en ce**
**que** l'installation de climatisation (12) présente au moins un élément de renforcement (90) qui renforce un composant (38, 24, 90) en matière plastique.

11. Véhicule avec une installation de climatisation selon l'une quelconque des revendications 1 à 10, dans lequel l'installation de climatisation (12) est agencée sur un toit (16) du véhicule (10) et climatise un espace intérieur du véhicule (10).
